# EUROPÄISCHE PATENTSCHRIFT

(11) **EP 2 509 865 B1**
(45) Veröffentlichungstag und Bekanntmachung des Hinweises auf die Patenterteilung: **23.10.2013**
(21) Anmeldenummer: 10785071.1
(22) Anmeldetag: 02.12.2010
(51) Int. Cl.: B64D 11/00

(54) **SCHLOSS FÜR EINE GEPÄCKBOX**
LOCK FOR A LUGGAGE BOX
SERRURE POUR UN COFFRE À BAGAGES

(30) Priorität: 09.12.2009 DE 102009044832
(43) Veröffentlichungstag der Anmeldung: 17.10.2012
(73) Patentinhaber: SFS Intec Holding AG, 9435 Heerbrugg (CH)
(72) Erfinder: SCHENDEL, Olav, 70567 Stuttgart (DE); COSTABEL, Sascha, 75443 Ötisheim (DE)
(86) Internationale Anmeldenummer: PCT/EP2010/068681
(87) Internationale Veröffentlichungsnummer: WO 2011/069875

(56) Entgegenhaltungen:
- WO-A1-2008/086256
- WO-A2-2006/088775
- DE-U1-202007 000 112
- GB-A- 2 168 748

## Beschreibung

Die Erfindung betrifft ein Schloss für eine in der Kabine eines Flugzeuges oben montierte Gepäckbox, die ein stationäres Gehäuse und einen um eine Drehachse beweglichen Deckel aufweist, mit einer an dem Gehäuse anbringbaren oder angebrachten Schließbolzeneinrichtung, die wenigstens einen Schließbolzen trägt, mit einer an dem Deckel anbringbaren oder angebrachten Falle mit wenigstens einem um eine Schwenkachse verschwenkbaren Schließhaken zum Erfassen des Schließbolzens zur Verriegelung des Schlosses und mit einer manuell betätigbaren Antriebseinrichtung zum Wegschwenken des Schließhakens von dem Schließbolzen zur Entriegelung des Schlosses.

Die Hauptfunktion eines solchen Schlosses ist es, den Deckel oder die Gepäckwanne oder-schütte einer Gepäckbox bei allen Flugbedingungen einschließlich Notlandebedingungen sicher zu verriegeln und zu entriegeln. Die Antriebseinrichtung innerhalb des Schlosses ist durch ein mechanisches Verbindungsglied mit einem Bedienungsknopf oder -griff verbunden, der an dem Deck so angebracht ist, dass er von außerhalb der Gepäckbox betätigbar ist. Die Betätigung des Knopfes oder Griffes führt bei dem bekannten Schloss zu einer Drehbewegung des mechanischen Verbindungsgliedes, durch die das Schloss entriegelt wird. Das Schloss ist dabei so ausgebildet, dass ein unabsichtliches Öffnen im belasteten oder entlasteten Zustand der Gepäckbox verhindert wird. In der Luftfahrtechnik wird verlangt, dass die Falle des Schlosses eine Fail-Safe-Funktion hat. Diesem Zweck dient eine doppelte Verriegelung. Diese doppelte Verriegelung geschieht bei dem bekannten Schloss zum einen durch einen Schließbolzen, der durch einen Schließhaken erfasst wird, und zum anderen durch einen Sperrstift, der bei geöffnetem Deckel der Gepäckbox aus der Falle hervorschaut, bei dem Schließen des Deckels der Gepäckbox aber durch die Schließbolzeneinrichtung in das Gehäuse der Falle hinein gedrückt wird. Sowohl der Schließbolzen als auch der Sperrstift sind jeweils für sich in der Lage, die erforderlichen Belastungen zu tragen.

Problematisch ist bei dem bekannten Schließmechanismus für eine Gepäckbox, dass von dem mittig an dem Deckel angebrachten Schwenkgriff aus zwei Schlösser betätigt werden müssen, die an dem einen bzw. anderen Ende des Deckels angebracht sind, wofür der Schwenkgriff und die beiden Wellen sowie die beiden Fallen auf einer Achse montiert sein müssen. Der Schwenkgriff macht eine rotatorische Bewegung, die über die Wellen zu den Fallen der Schlösser übertragen wird. In den Fallen wird die rotatorische Bewegung jeweils in eine Schwenkbewegung der Schließhaken umgesetzt. Davon völlig unabhängig wird der Sperrstift jedes Schlosses in seine Verriegelungsstellung gebracht, indem der Deckel geschlossen wird. Die Schließbolzeneinrichtung drückt den sich an ihr vorbei bewegenden Sperrstift in das Gehäuse der Falle hinein. In Fällen, in denen die Schlösser und der Schwenkgriff nicht auf einer Achse montiert werden können, ist das bekannte Schloss überhaupt nicht einsetzbar. Weiter ist problematisch, dass die für die Betätigung des bekannten Schlosses erforderliche Konstruktion der Wellen und deren Anbringung an dem Deckel zusätzliches Gewicht, erhöhte Bauteilkosten und einen erhöhten Montageaufwand mit sich bringt, was alles insgesamt in der Luftfahrtechnik äußerst unerwünscht ist. Schließlich ist bei dem bekannten Schloss die Schließbolzeneinrichtung in zwei Achsen einstellbar. Der Schließbolzen dient gleichzeitig als Anschlag für einen Endstop. Das ist mit dem Nachteil verbunden, dass sich bei jeder Justage der Schließbolzeneinrichtung auch der Anschlag des Endstops verstellt und nachgestellt werden muss. Überdies erfolgt das Öffnen des Schlosses durch Ziehen am Betätigungsgriff. Da aber zwischen Betätigungsgriff und Welle kein Getriebe vorhanden ist, ist eine höhere Bedienkraft erforderlich.

Aus der US 2002/00 56 296 A1 ist ein Schloss für Gehäuse, Werkzeugkästen oder Ähnlichem bekannt. Dieses Schloss hat zwei Schließbolzen an einem Deckel und zwei um eine Schwenkachse verschwenkbare Schließhaken, welche von einer manuell betätigbaren Antriebseinrichtung gemeinsam verschwenkt werden. Eine Gepäckbox in einem Flugzeug muss zwei Schlösser aufweisen, die durch einen gemeinsamen Betätigungsknopf betätigt werden können. Das bekannte Schloss ist dafür nicht geeignet. Es lässt sich durch zwei Druckknöpfe betätigen, die links und rechts von dem Schloss angeordnet sind. Die Druckknöpfe sind mit den Schließhaken durch ein gemeinsames starres Betätigungsglied verbunden, durch dessen Verschiebung die beiden Schließhaken gemeinsam verschwenkbar sind. Ein solches Schloss dürfte bei der Gepäckbox eines Flugzeuges nicht eingesetzt werden, weil die Schließhaken nicht einzeln betätigbar sind. Wenn ein Schließhaken blockiert sein sollte, wäre durch ihn auch der andere Schließhaken blockiert.

Aus der GB 2 168 748 A ist ein Schloss zur Verriegelung einer Schiebetür an einem Türrahmen bekannt. Das Schloss umfasst zwei jeweils um eine Schwenkachse verschwenkbare Schließhaken, die mittels einer Antriebseinrichtung in Form einer Zahnstange gemeinsam verschwenkt werden. Auch dieses bekannte Schloss wäre bei einer Gepäckbox eines Flugzeuges nicht einsetzbar, weil beide Schließhaken, zumindest in Öffnungsrichtung, nur gemeinsam verschwenkbar sind. Wenn ein Schließhaken im geschlossenen Zustand blockiert wäre, könnte auch der andere Schließhaken mittels der Antriebseinrichtung nicht mehr geöffnet werden.

Aus der WO 2008/086256 A1 ist ein Schloss zur Verriegelung von zwei Türen bekannt. Das Schloss weist zwei jeweils um eine Schwenkachse verschwenkbare Schließhaken auf, und umfasst eine Antriebsvorrichtung zum gemeinsamen Verschwenken der Schließhaken. Die Antriebsvorrichtung weist eine Zahnstange auf, die durch einen Seilzug betätigbar ist.

Aus der DE 20 2007 00 112 U1 ist weiterhin ein Schloss für eine Gepäckbox eines Flugzeuges bekannt.

Aufgabe der Erfindung ist es, ein Schloss der eingangs genannten Art so auszubilden, dass es die vorgenannten Nachteile vermeidet und insbesondere bei einer Gepäckbox einsetzbar ist, auch wenn sich der Betätigungsknopf oder - griff nicht auf der Achse der Falle befindet.

Diese Aufgabe ist erfindungsgemäß dadurch gelöst, dass die Schließbolzeneinrichtung zwei Schließbolzen trägt, dass die Falle zwei jeweils um eine Schwenkachse verschwenkbare Schließhaken aufweist, dass die Antriebseinrichtung zum gemeinsamen Verschwenken der Schließhaken ausgebildet ist, die Antriebseinrichtung eine Zahnstange und ein Schiebeglied aufweist, die in einer linearen Führung hintereinander angeordnet, durch Druck eines Federelements in Richtung auf einen Anschlag vorgespannt und durch manuelle Betätigung gegen den Druck des Federelements in Richtung von dem Anschlag weg verschiebbar sind, dass die Antriebseinrichtung ein Zahnrad aufweist, das mit der Verzahnung der Zahnstange in Eingriff und durch einen Seilzug betätigbar ist.

Das Schloss nach der Erfindung ist durch einen Betätigungszug entriegelbar, der unsichtbar innerhalb des Deckels (Gepäckwanne oder -schütte) verlegt ist. Die Verwendung eines leichten Betätigungszuges bringt einen Gewichtsvorteil mit sich. Die Montage ist unkompliziert, weil sich Betätigungszüge viel günstiger als Wellen und Hebel aus CFK montieren lassen. Zu dem geringeren Gewicht und dem geringeren Montageaufwand kommen noch geringere Bauteilkosten hinzu. Der Hauptvorteil des Schlosses nach der Erfindung ist, dass die Falle und der Betätigungsknopf oder -griff nicht auf einer gemeinsamen Achse montiert werden müssen. Die Fail-Safe-Funktion ist dadurch gewährleistet, dass die Falle zwei Schließhaken hat und dass jeder Schließhaken mit einem Schließbolzen in Eingriff kommt, so dass, wenn einer der Schließbolzen oder Schließhaken ausfallen sollte, der andere Schließbolzen und der andere Schließhaken die gesamte Last aufnehmen können. Da die beiden Schließhaken mit der Zahnstange und dem Schiebeglied verbunden sind, die ihrerseits nur unter Federdruck aneinander anliegen, aber ansonsten keine mechanische gegenseitige Verbindung haben, kann das Schloss auch sicher verriegelt werden, wenn nur ein Schließhaken in der Lage ist, seinen zugeordneten Schließbolzen zu erfassen. Die lineare Zugbewegung, die mit dem Betätigungsknopf erzeugt wird, wird in eine Drehbewegung umgesetzt, welche ihrerseits eine translatorische Bewegung der Zahnstange und des Schiebegliedes zur Folge hat, welche die beiden Schließhaken mit sich nehmen und um deren Anlenkstellen verschwenken. Die Betätigung durch einen Seilzug ergibt eine einfache, störungsfreie, gewichtsarme Betätigung für das Zahnrad und macht die bei bekannten Gepäckboxen bislang eingesetzten Wellen überflüssig. Die beiden Schlösser und der Schwenkgriff einer Gepäckbox müssen nicht mehr auf einer Achse montiert werden.

Vorteilhafte Ausgestaltungen des Schlosses nach der Erfindung bilden die Gegenstände der Unteransprüche.

In einer Ausgestaltung des Schlosses nach der Erfindung sind die Schließhaken mit der Zahnstange bzw. dem Schiebeglied jeweils durch einen Kniehebel verbunden, der an dem Schließhaken neben dessen Schwenkachse so angelenkt ist, dass die Verriegelungsstellung nur durch Zugkrafteinwirkung auf die Anlenkstelle des Kniehebels an dem Schließhaken wieder geöffnet werden kann. Das ermöglicht auf einfache Weise die in der Luftfahrtechnik verlangten Funktionen Fail-Safe (doppelte Verriegelung) und Positive Locking. Letzteres wird erfindungsgemäß dadurch erreicht, dass die Kniehebel jeweils in eine Endlagensperrstellung bringbar sind, in der sie mechanisch verriegelt sind und so ein Aufspringen des Schlosses durch Überlast oder Vibration selbsttätig verhindern.

In einer weiteren Ausgestaltung des Schlosses nach der Erfindung ist einer der beiden Kniehebel über seinen Anlenkpunkt an dem zugeordneten Schließhaken hinaus verlängert und als ein Vorauslösehebel zum Verschieben der Zahnstange ausgebildet. Bei einer Gepäckbox, bei welcher der Deckel üblicherweise einfach geschlossen wird, ohne dass zusätzlich auch der Betätigungsknopf bedient wird, wird durch die Schließbewegung des Deckels durch den sich an den Vorauslösehebel anlegenden Schließbolzen sichergestellt, dass beide Schließhaken geöffnet werden, um anschließend die beiden Schließbolzen aufzunehmen. In einer weiteren Ausgestaltung des Schlosses nach der Erfindung weist die Zahnstange eine zusätzliche Verzahnung auf, die mit einer Verzahnung an einem schwenkbar gelagerten Notbetätigungshebel in Eingriff ist. Sollte der der Zahnstange zugeordnete Schließhaken zum Beispiel aufgrund eines gebrochenen Federelements in offener Stellung klemmen, so verriegelt sich das Schloss nicht, sondern es erfolgt eine Rückmeldung an die Bedienungsperson. In diesem Fall kann der Schließhaken und somit das Schloss manuell ent- und verriegelt werden, woraufhin dann eine Wartung erfolgen muss. In diesem Fall kann aber noch das Gepäck entnommen und sichergestellt werden, dass das Schloss mit nur einem Schließhaken sicher schließt. Sollte die der Zahnstange zugeordnete Schließzange im geschlossenen Zustand klemmen und sich durch manuelle Betätigung mit Hilfe des Notbetätigungshebels nicht entriegeln lassen, so bleibt das Schloss verriegelt und muss gewartet werden. Das bedeutet, dass das Gepäck erst nach der Reparatur entnommen werden kann.

In einer weiteren Ausgestaltung des Schlosses nach der Erfindung haben die Schließbolzen unterschiedlich große Durchmesser. Wenn einer der Schließbolzen nicht mit dem zugeordneten Schließhaken in Eingriff kommen kann, ist so gewährleistet, dass wenigstens der andere Schließhaken, der dem Schließbolzen mit kleinerem Durchmesser zugeordnet ist, mit diesem Schließbolzen in Eingriff kommt.

In einer weiteren Ausgestaltung des Schlosses nach der Erfindung sind die beiden Schließhaken identisch ausgebildet. Es wäre zwar möglich, zwei Schließbolzen zu verwenden, die den gleichen Durchmesser haben und stattdessen Schließhaken einzusetzen, bei denen die die Schließbolzen aufnehmenden Öffnungen eine unterschiedliche lichte Weite haben, das wäre hinsichtlich der Ersatzteilhaltung und der Montage aber die teurere Lösung.

In einer weiteren Ausgestaltung des Schlosses nach der Erfindung ist der Schließhaken, mit welchem der Schließbolzen mit dem kleineren Durchmesser in Eingriff bringbar ist, dem als Vorauslösehebel ausgebildeten Kniehebel zugeordnet. Das gewährleistet, dass wenigstens der Schließhaken, der mit der Zahnstange verbunden ist, unter allen Umständen in eine Stellung gebracht werden kann, in der er den Schließhaken kleineren Durchmessers aufnehmen kann, auch wenn zum Beispiel das Federelement gebrochen sein sollte. Der Schließhaken und der Schließbolzen brauchen dabei wegen des kleineren Durchmessers des Schließbolzens nicht genau zu fluchten.

In einer weiteren Ausgestaltung des Schlosses nach der Erfindung ist zur Verriegelung des Schlosses der Schließhaken, der dem als Vorauslösehebel ausgebildeten Kniehebel zugeordnet ist, manuell mit Hilfe des Notbetätigungshebels mit dem Schließbolzen mit dem kleineren Durchmesser in Eingriff bringbar, auch wenn der andere Schließbolzen nicht mit dem anderen Schließhaken in Eingriff ist.

Ausführungsbeispiele der Erfindung werden im Folgenden unter Bezugnahme auf die Zeichnungen näher beschrieben. Es zeigt
- Fig. 1: ein Schloss nach der Erfindung in Seitenansicht bei geöffnetem Fallengehäuse und im verriegelten Zustand,
- Fig. 2: das Schloss nach der Erfindung in einer Ansicht wie in Fig. 1, aber im entriegelten Zustand,
- Fig. 3: das Schloss nach Fig. 2, aber in einer Ansicht von hinten,
- Fig. 4: die Falle des Schlosses nach den Fig. 1 - 3 in auseinander gezogener Darstellung,
- Fig. 5: als eine Einzelheit eine Schließbolzeneinrichtung, von der in den Fig. 1 - 3 der Übersichtlichkeit halber nur zwei Schließbolzen gezeigt sind, und
- Fig. 6: eine schematische Seitenansicht einer Gepäckbox eines Flugzeuges.

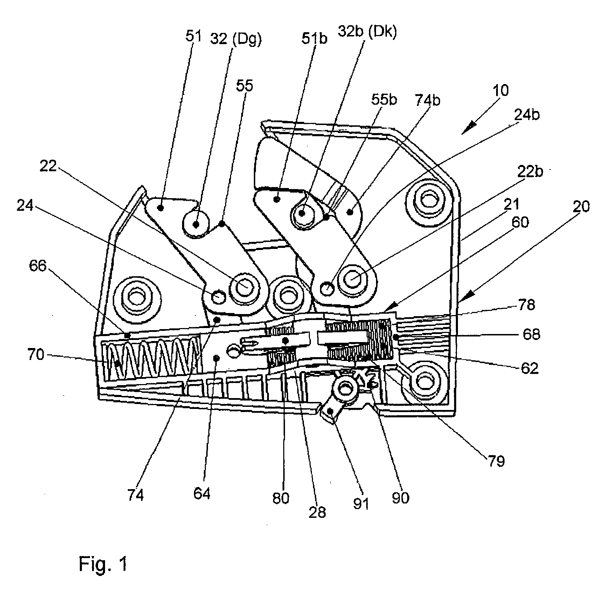

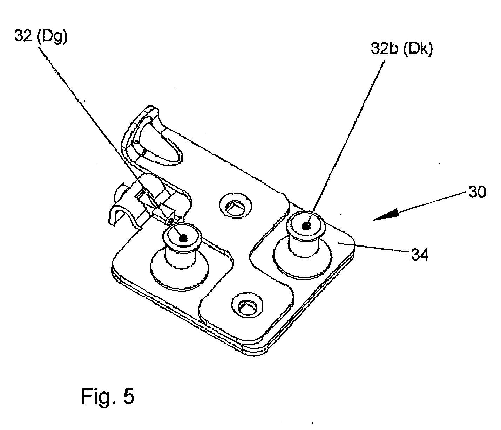

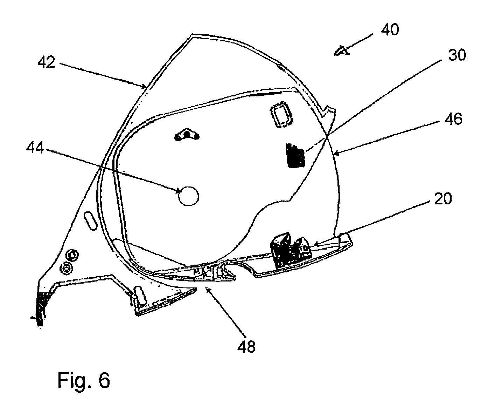

Fig. 1 zeigt ein Ausführungsbeispiel eines Schlosses nach der Erfindung, das insgesamt mit 10 bezeichnet ist. Das Schloss 10 ist ein Fallenschloss. Es umfasst eine insgesamt mit 20 bezeichnete Falle und eine in Fig. 5 dargestellte und insgesamt mit 30 bezeichnete Schließbolzeneinrichtung (Keeper), von welcher in Fig. 1 lediglich zwei Schließbolzen 32 und 32b gezeigt sind. Das Schloss 10 ist vorzugsweise für eine in der Kabine eines Flugzeuges oben montierte Gepäckbox 40 bestimmt, von welcher ein Beispiel in Fig. 6 in einer schematischen Seitenansicht gezeigt ist.

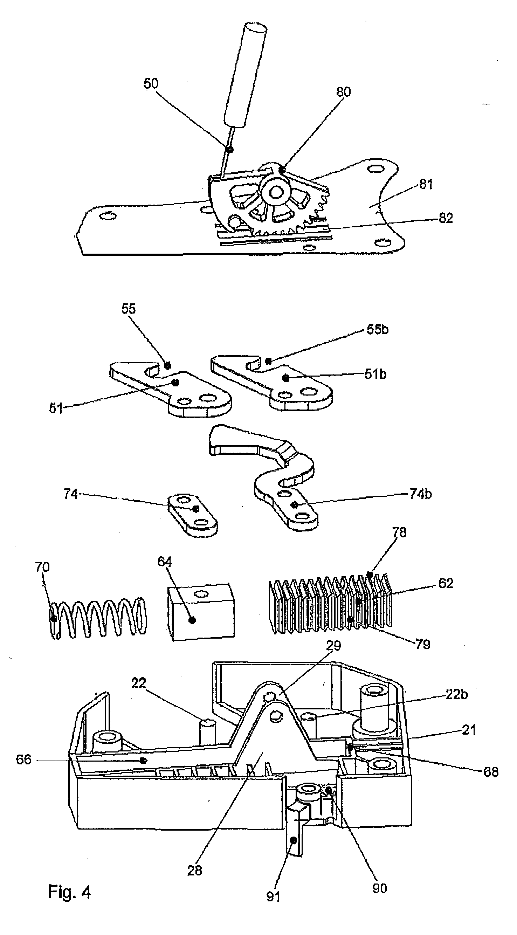

Gemäß der Darstellung in Fig. 6 hat die Gepäckbox 40 ein stationäres Gehäuse 42, das in der Kabine eines Flugzeuges oben montiert ist. Das Gehäuse 42 weist einen um eine Drehachse 44 beweglichen Deckel 46 auf. In dem gezeigten Ausführungsbeispiel ist der Deckel 46 eine sich nach unten öffnende Gepäckwanne oder -schütte. Die Schließbolzeneinrichtung 30 des Schlosses 10 ist an einer Seitenwand des Gehäuses 42 angebracht. Die Falle 20 des Schlosses 10 ist an einer der Seitenwand des Gehäuses benachbarten Seitenwand des Deckels 46 angebracht, und zwar so, dass bei dem Hochschwenken des Deckels 46 die Falle 20 und die Schließbolzeneinrichtung 30 gegenseitig in Eingriff gelangen. An einem nicht dargestellten entgegengesetzten Ende der Gepäckbox 40 ist ein identisch ausgebildetes weiteres Schloss 10 angebracht. Die Betätigung des Schlosses 10 erfolgt durch einen Druckknopf 48, der über Seilzüge 50, von denen einer in Fig. 4 gezeigt ist, mit der Falle 20 jedes Schlosses 10 verbunden ist. Wenn der Deckel 46 aus der in Fig. 6 gezeigten Stellung, in welcher das Schloss 10 entriegelt ist, nach oben geschwenkt wird, kommen die Falle 20 und die Schließbolzen 32, 32b der Schließbolzeneinrichtung 30 miteinander in Eingriff, wodurch das Schloss 10 verriegelt wird. Durch Betätigung des Druckknopfes 48 wird das Schloss wieder entriegelt, woraufhin sich dann der Deckel 46 unter seinem Eigengewicht oder belastet durch Gepäck nach unten in die in Fig. 6 gezeigte Stellung bewegt.

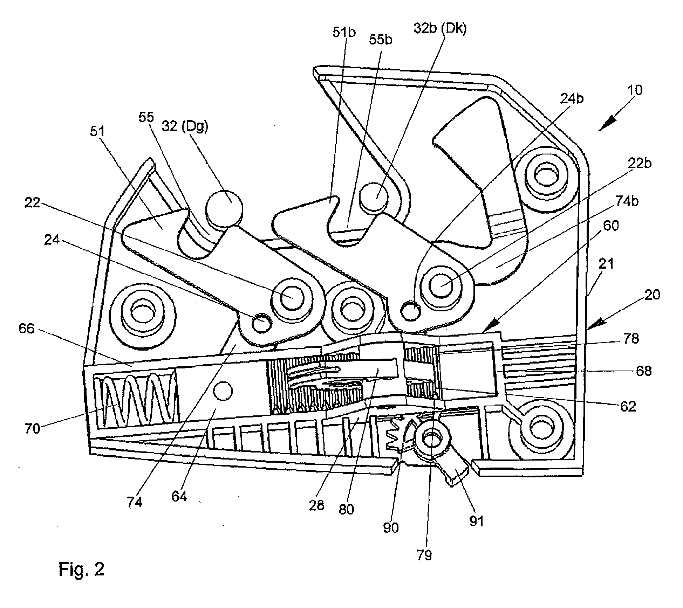

Die Falle 20 hat ein Gehäuse 21 aus glasfaserverstärktem Thermoplast, dessen Aufbau am Besten in der auseinandergezogenen Darstellung der Falle 20 in Fig. 4 zu erkennen ist. Die Falle 20 weist zwei jeweils um eine Schwenkachse 22 bzw. 22b verschwenkbare Schließhaken 51, 51 b auf. Die Schließhaken 51, 51 b haben jeweils eine Öffnung 55 bzw. 55b zum Erfassen der Schließbolzen 32 bzw. 32b. Die Schließbolzen 32, 32b sind parallel zueinander an einer Grundplatte 34 der Schließbolzeneinrichtung 30 befestigt, wie es in Fig. 5 zu erkennen ist. Die Schließhaken 51, 51 b sind aus der in Fig. 1 gezeigten Stellung, in welcher das Schloss 10 verriegelt ist, in eine in Fig. 2 gezeigte Stellung, in welcher das Schloss 10 entriegelt ist, mit Hilfe einer insgesamt mit 60 bezeichneten Antriebseinrichtung verschwenkbar.

Die Antriebseinrichtung 60 weist eine Zahnstange 62 und ein Schiebeglied 64 auf, die in einer linearen Führung 66 hintereinander angeordnet sind. Die lineare Führung 66 wird durch einen in dem Gehäuse 21 vorhandenen Kanal gebildet. Das in Fig. 1 rechte Ende des Kanals bildet einen Anschlag 68 für die Zahnstange 62. Die Zahnstange 62 und das Schiebeglied 64 sind durch ein ebenfalls in dem Kanal angeordnetes Federelement 70 in Richtung auf den Anschlag 68 vorgespannt, so dass sie bestrebt sind, die in Fig. 1 dargestellte Stellung einzunehmen.

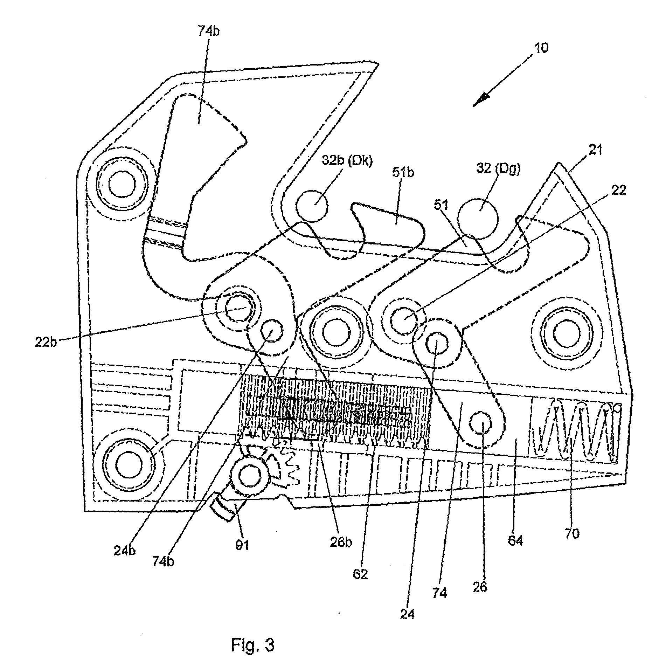

Die Schließhaken 51, 51 b sind mit der Zahnstange 62 bzw. mit dem Schiebeglied 64 durch einen Kniehebel 74 bzw. 74b verbunden. Die Kniehebel 74, 74b sind an den Schließhaken 51 bzw. 51 b jeweils neben deren Schwenkachse 22 bzw. 22b an einer weiteren Schwenkachse 24 bzw. 24b angelenkt. Die Kniehebel 74, 74b sind in der Rückansicht des Schlosses 10 in Fig. 3 vollständig zu sehen. In Fig. 3 ist weiter erkennbar, dass der Kniehebel 74 über seinen Anlenkpunkt 24 an dem Schließhaken 51 hinaus verlängert und als ein Vorauslösehebel zum Verschieben der Zahnstange 62 ausgebildet ist. Die Funktion des Vorauslösehebels ist weiter unten noch näher erläutert.

Die Antriebseinrichtung 60 wird durch ein Zahnrad 80 vervollständigt, das mit einer Verzahnung 78 der Zahnstange 62 in Eingriff ist und durch einen der mit dem Druckknopf 48 verbundenen Seilzüge 50 betätigbar ist. Das Zahnrad 80 setzt die translatorische Bewegung des Seilzuges 50 in eine translatorische Bewegung der Zahnstange 62 und des Schiebegliedes 64 um. In der auseinandergezogenen Darstellung in Fig. 4 ist zusätzlich ein Deckel 81 aus Aluminium dem Gehäuse 21 zugeordnet, der in den Fig. 1 und 2 nicht gezeigt ist. Er deckt die lineare Führung 66 mit den darin angeordneten Elementen oben ab und bietet den Achsen 22 / 22b ein Widerlager. Das Zahnrad 80 ragt durch einen mittleren Schlitz 82 in dem Deckel 81 hindurch und ist mit der Verzahnung 78 der Zahnstange 62 in Eingriff. Wenn durch den Seilzug 50 auf das Zahnrad 80 eine Zugkraft ausgeübt wird, dreht sich dieses in Fig. 4 im Uhrzeigersinn und bewegt in der Darstellung in Fig. 1 gegen den Druck des Federelements 70 die Zahnstange 62 und das Schiebeglied 74 nach links in Richtung von dem Anschlag 68 weg. Die Kniehebel 74, 74b sind jeweils an ihrem der Schwenkachse 24 bzw. 24b benachbarten Ende auf der von dem Zahnrad 80 abgewandten Seite an einer Schwenkachse 26 bzw. 26b an dem Schiebeglied 64 bzw. an der Zahnstange 68 angelenkt, wie es am besten in der Rückansicht des Schlosses 10 in Fig. 3 zu erkennen ist. Die Anordnung ist dabei so getroffen, dass die Kniehebel 74, 74b in der in Fig. 1 gezeigten Stellung, in welcher das Schloss 10 verriegelt ist, nur durch Zugkrafteinwirkung auf die Anlenkstelle des Kniehebels 74, 74b an dem Schließhaken 51 bzw. 51 b wieder geöffnet werden können. Der Grund dafür ist, dass sich die Kniehebel 74, 74b in dieser Stellung jeweils zusammen mit ihrem zugeordneten Schließhaken 51 bzw. 51 b in einer sogenannten Endlagensperre (im Englischen positive locking oder overcenter position) befinden, aus der sie nicht durch Krafteinwirkung von den Öffnungen 55, 55b der Schließhaken 51 bzw. 51 b her entfernt werden können. Diese Endlagensperre kann nur durch Verschiebung der Zahnstange 62 und des Schiebegliedes 64, also durch Drehung des Zahnrades 80 oder durch Betätigung eines weiter unten beschriebenen Notbetätigungshebels 91 aufgehoben werden. Bei dieser Verschiebung wird wenigstens der Schließhaken 51 b im Gegenuhrzeigersinn in die Stellung nach Fig. 2 verschwenkt, in welcher das Schloss 10 entriegelt ist.

Aufgrund der vorgenannten Endlagensperre sind die Schließhaken 51, 51 b in ihrer in Fig. 1 gezeigten geschlossenen Stellung zusätzlich mechanisch verriegelt, um ein Aufspringen durch Überlast oder extreme Vibration zu verhindern. Erreicht wird das, indem die Kniehebel 74, 74b über ihren Totpunkt hinausbewegt und so in ihrer Endlage gesperrt oder verriegelt werden. Die Schließhaken 51, 51 b könnten auch durch Rastnasen oder Sperrklinken blockiert werden, die dargestellte Ausbildung ist aber die konstruktiv und mechanisch einfachere Lösung, denn Rastnasen oder Sperrklinken würden zusätzliche Bauteile bedeuten, die unter Last eher schwergängig sind.

Das Zahnrad 80 ist oberhalb der Zahnstange 62 an dem Gehäuse 21 drehbar gelagert. Zu diesem Zweck erstrecken sich beiderseits der Führung 66 zwei Konsolen 28, 29 nach oben, welche jeweils eine Lagerbohrung aufweisen, in denen eine Achse des Zahnrades 80 drehbar gelagert ist.

Die Zahnstange 62 weist, wie am besten in Fig. 4 ersichtlich, eine zusätzliche Verzahnung 79 auf, die mit einer Verzahnung 90 an dem oben bereits erwähnten Notbetätigungshebel 91 in Eingriff ist, der an dem Gehäuse 21 schwenkbar gelagert ist.

Die beiden Schließhaken 51, 51 b sind identisch ausgebildet. Hingegen haben die Schließbolzen 32, 32b unterschiedlich große Durchmesser Dg bzw. Dk. Der Schließbolzen 32b hat daher in der Öffnung 55b in dem Schließhaken 51 b Spiel, wenn sich die Schließhaken 51, 51 b in der in Fig. 1 gezeigten Stellung befinden, in welcher das Schloss 10 verriegelt ist.

Normalerweise drückt das Federelement 70 über das Schiebeglied 64 die Zahnstange 62 gegen den Anschlag 68, so dass das Schloss 10 stets verriegelt ist, solange auf den Druckknopf 48 kein Druck ausgeübt wird. Wenn das Federelement 70 aufgrund einer Störung, zum Beispiel wegen Federbruches, dazu nicht in der Lage sein sollte, ist zur Verriegelung des Schlosses 10 der Schließhaken 51 b, der dem als Vorauslösehebel ausgebildeten Kniehebel 74b zugeordnet ist, manuell mit Hilfe des Notbetätigungshebels 91 mit dem Schließbolzen 32b mit dem kleineren Durchmesser Dk in Eingriff bringbar, auch wenn der andere Schließbolzen 32 nicht mit dem anderen Schließhaken 51 in Eingriff ist oder in Eingriff bringbar ist. Sobald der Notbetätigungshebel 91 den Schließhaken 51 b in die in Fig. 1 gezeigte Stellung gebracht hat, befindet sich der Kniehebel 74b in seiner Endlagensperrstellung, aus der er nur durch erneute Betätigung des Notbetätigungshebels 91 entfernt werden kann, so dass das Schloss 10 auch nach manueller Notverriegelung in der verriegelten Stellung bleibt. Der Notbetätigungshebel 91 ist über einen schmalen Spalt, der zwischen der Seitenwand des Deckels 46 und der Seitenwand des Gehäuses 42 vorhanden ist, mittels eines Gegenstands wie einer Kreditkarte od. dgl. betätigbar.

Normalerweise, also wenn keine Störung an dem Federelement 70 oder an anderer Stelle vorliegt, die eine ordnungsgemäße Betätigung des Schlosses 10 be- oder verhindern könnte, befindet sich das Schloss bei geschlossenem Deckel 46 der Gepäckbox 40 in der in Fig. 1 gezeigten Stellung. Durch Zug an dem Seilzug 50 aufgrund einer Betätigung des Druckknopfes 48 wird das Zahnrad 80 in der Darstellung in den Fig. 1 und 2 im Uhrzeigersinn gedreht. Dadurch wird die Zahnstange 62 und mit ihr das Schiebeglied 64 gegen den Druck des Federelements 70 nach links bewegt, so dass die Schließhaken 51, 51 b im Gegenuhrzeigersinn in die Fig. 2 gezeigte Stellung verschwenkt werden, in der das Schloss 10 entriegelt ist. Sobald die Schließbolzen 32, 32b aus den Öffnungen 55, 55b der Schließhaken 32, 32b freikommen, bewegt sich der Deckel 46 nach unten, so dass Gepäck der Gepäckbox 40 entnommen oder in die Gepäckbox getan werden kann. Wenn nun der Deckel 46 wieder nach oben geklappt wird, bewegt sich das in Fig. 1 obere linke freie Ende des als Vorauslösehebel ausgebildeten Kniehebels 74b gegen den Schließbolzen 32b und wird dadurch im Uhrzeigersinn verschwenkt, also in das Gehäuse 21 hinein bewegt. Dadurch, dass der Schließbolzen 32b auf das freie Ende des Kniehebels 24b auftrifft, wird als Erstes über den Vorauslösehebel die Endlagensperre beseitigt. Es können die Schließhaken 51, 51 b wieder bewegt werden, um das Schloss 10 zuschnappen zu lassen. In Fig. 3 ist zu erkennen, dass der Kniehebel 74b dabei die Zahnstange 62 und das Schiebeglied 64 in Richtung von dem Anschlag 68 weg bewegt, wobei das Federelement 70 gespannt wird. Die Schließbolzen 32, 32b bewegen sich dabei an den Schließhaken 51, 51 b entlang, bis sie die Öffnungen 55, 55b erreichen. Sobald sie sich über den Öffnungen 55, 55b befinden, werden die Schließhaken 51, 51b durch den Druck des Federelements 70 in die in Fig. 1 dargestellte Stellung verschwenkt, in welcher das Schloss 10 wieder verriegelt ist. Der Notbetätigungshebel 91 macht dabei die Bewegung der Zahnstange 62 jeweils mit.

Die Falle 20 wird bei der Verriegelung des Schlosses 10 an der Schließbolzeneinrichtung 30 doppelt verriegelt, und zwar erfolgen eine primäre Verriegelung zwischen dem Schließhaken 51 und dem Schließbolzen 32 mit Hilfe des Kniehebels 74 und eine sekundäre Verriegelung zwischen dem Schließhaken 51 b und dem Schließbolzen 32b mit Hilfe des Kniehebels 74b. Weder die primäre Verriegelung noch die sekundäre Verriegelung kann durch Krafteinwirkung auf die Schließhaken 51, 51 b gelöst werden, weil die Kniehebel 74, 74b in der Verriegelungsstellung jeweils in ihrer Endlagensperrstellung sind, wie oben erläutert.

Wenn die primäre Verriegelung in der Offenstellung blockiert ist, weil an dem Schloss 10 eine Störung vorhanden ist, dann kann das Schloss 10 immer noch mit Hilfe der sekundären Verriegelung durch den Kniehebel 74b in der verriegelten Stellung arretiert werden. Wenn im Falle einer Störung nur die Verriegelung über den Schließhaken 51 b und den Schließbolzen 32b erfolgt, steht wegen des Spiels zwischen dem Schließhaken 51b und dem Schließbolzen 32b der Deckel im geschlossenen Zustand etwas aus der Gepäckbox 40 hervor, so dass eine Störung von außen ohne Weiteres zu erkennen ist. Da der Deckel 46 trotzdem sicher verriegelt ist, darf das Flugzeug starten.

### Bezugszeichenliste

- 10: Schloss
- 20: Falle
- 21: Gehäuse
- 22: Schwenkachse
- 22b: Schwenkachse
- 24: Schwenkachse
- 24b: Schwenkachse
- 26: Schwenkachse
- 26b: Schwenkachse
- 28: Konsole
- 29: Konsole
- 30: Schließbolzeneinrichtung
- 32: Schließbolzen
- 32b: Schließbolzen
- 34: Grundplatte
- 40: Gepäckbox
- 42: Gehäuse
- 44: Drehachse
- 46: Deckel
- 48: Druckknopf
- 50: Seilzug
- 51: Schließhaken
- 51b: Schließhaken
- 55: Öffnung
- 55b: Öffnung
- 60: Antriebseinrichtung
- 62: Zahnstange
- 64: Schiebeglied
- 66: lineare Führung
- 68: Anschlag
- 70: Federelement
- 74: Kniehebel
- 74b: Kniehebel
- 78: Verzahnung
- 79: Verzahnung
- 80: Zahnrad
- 81: Deckel
- 82: Schlitz
- 90: Verzahnung
- 91: Notbetätigungshebel

- Dg: großer Durchmesser
- Dk: kleiner Durchmesser

## Patentansprüche

1. Schloss für eine in der Kabine eines Flugzeuges oben montierte Gepäckbox, die ein stationäres Gehäuse und einen um eine Drehachse beweglichen Deckel aufweist,
mit einer an dem Gehäuse anbringbaren oder angebrachten Schließbolzeneinrichtung, die wenigstens einen Schließbolzen trägt,
mit einer an dem Deckel anbringbaren oder angebrachten Falle mit wenigstens einem um eine Schwenkachse verschwenkbaren Schließhaken zum Erfassen des Schließbolzens zur Verriegelung des Schlosses und mit einer manuell betätigbaren Antriebseinrichtung zum Wegschwenken des Schließhakens von dem Schließbolzen zur Entriegelung des Schlosses, wobei
die Schließbolzeneinrichtung (30) zwei Schließbolzen (32, 32b) trägt,
dass die Falle (20) zwei jeweils um eine Schwenkachse (22, 22b) verschwenbkare Schließhaken (51, 51 b) aufweist,
die Antriebseinrichtung (60) zum gemeinsamen Verschwenken der Schließhaken (51, 51 b) ausgebildet ist,
die Antriebseinrichtung (60) eine Zahnstange (62) und ein Schiebeglied (64) aufweist, die in einer linearen Führung (66) hinter einander angeordnet, durch Druck eines Federelements (70) in Richtung auf einen Anschlag (68) vorgespannt und durch manuelle Betätigung gegen den Druck des Federelements (70) in Richtung von dem Anschlag (68) weg verschiebbar sind, und
die Antriebseinrichtung (60) ein Zahnrad (80) aufweist, das mit der Verzahnung (78) der Zahnstange (62) in Eingriff und durch einen Seilzug (50) betätigbar ist.

2. Schloss nach Anspruch 1, **dadurch gekennzeichnet, dass** die Schließhaken (51, 51 b) mit der Zahnstange (62) bzw. dem Schiebeglied (64) jeweils durch einen Kniehebel (74, 74b) verbunden sind, der an dem Schließhaken (51, 51 b) neben dessen Schwenkachse (22, 22b) so angelenkt ist, dass die Verriegelungsstellung nur durch Zugkrafteinwirkung auf die Anlenkstelle des Kniehebels (74, 74b) an dem Schließhaken (51, 51 b) wieder geöffnet werden kann.

3. Schloss nach Anspruch 2, **dadurch gekennzeichnet, dass** einer (74) der beiden Kniehebel (74, 74b) über seinen Anlenkpunkt an dem zugeordneten Schließhaken (51 b) hinaus verlängert und als ein Vorauslösehebel zum Verschieben der Zahnstange (62) ausgebildet ist.

4. Schloss nach einem der vorhergehenden Ansprüche, **dadurch gekennzeichnet, dass** die Zahnstange (62) eine zusätzliche Verzahnung (79) aufweist, die mit einer Verzahnung (90) an einem schwenkbar gelagerten Notbetätigungshebel (91) in Eingriff ist.

5. Schloss nach einem der vorhergehenden Ansprüche, **dadurch gekennzeichnet, dass** die Schließbolzen (32, 32b) unterschiedlich große Durchmesser (Dg, Dk) haben.

6. Schloss nach Anspruch 5, **dadurch gekennzeichnet, dass** die beiden Schließhaken (51, 51 b) identisch ausgebildet sind.

7. Schloss nach den Ansprüchen 3 und 5 oder 6, **dadurch gekennzeichnet, dass** der Schließhaken (51 b), mit welchem der Schließbolzen (32b) mit dem kleineren Durchmesser (Dk) in Eingriff bringbar ist, dem als Vorauslösehebel ausgebildeten Kniehebel (74b) zugeordnet ist.

8. Schloss nach Anspruch 4 und einem der Ansprüche 5 bis 7, **dadurch gekennzeichnet, dass** zur Verriegelung des Schlosses (10) der Schließhaken (51 b), der dem als Vorauslösehebel ausgebildeten Kniehebel (74b) zugeordnet ist, manuell mit Hilfe des Notbetätigungshebels (91) mit dem Schließbolzen (32b) mit dem kleineren Durchmesser (Dk) in Eingriff bringbar ist, auch wenn der andere Schließbolzen (32) nicht mit dem anderen Schließhaken (51) in Eingriff ist oder in Eingriff bringbar ist.

## Claims

1. A lock for a stowage bin which is mounted overhead in the cabin of an aircraft and which has a stationary housing and a lid which can move about an axis of rotation,
with a locking pin device which can be mounted or is mounted on the housing and which carries at least one locking pin,
with a catch which can be mounted or is mounted on the lid and has at least one locking hook pivotable abut a pivot axis to receive the locking pin for locking the lock and with a manually operable drive device for pivoting the locking hook away from the locking pin for unlocking the lock, wherein
the locking pin device (30) carries two locking pins (32,32b),
in that the catch (20 has two locking hooks (51,51b) pivotable about a respective pivot axis (22,22b),
the drive device (60) is designed for common pivoting of the locking hooks (51,51b),
the drive device (60) has a gear rack (62) and a slide member (64), which are arranged one behind the other in a linear guide (66), which are biased by the pressure of a spring element (70) towards a stop member (68) and which, by manual actuation, can be pushed away from the stop member (68) against the force of the spring element (70) and the drive device (60) has a gearwheel (80) which is in engagement with the teeth (78) of the gear rack (62) and can be actuated by a control cable (50).

2. A lock according to Claim 1, **characterised in that** the locking hooks (51,51b) are connected to the gear rack (62) and to the slide member (64') by a respective toggle joint (74,74b) which is articulated in such a way on the locking hooks (51,51b) adjacent the pivot axis (22,22b) thereof that the locking position can only be opened again by tensile force acting on the articulation point of the toggle joint (74,74b) on the locking hooks (51,51b).

3. A lock according to Claim 2, **characterised in that** one (74) of the two toggle joints (74,74b) is extended beyond its articulation point on the associated locking hook (51b) and is in the form of a pre-release lever for displacing the gear rack (62).

4. A lock according to any one of the preceding Claims, **characterised in that** the gear rack (62) has an additional toothing (79) which is in engagement with a toothing (90) on a pivotably mounted emergency-operation lever (91).

5. A lock according to any one of the preceding Claims, **characterised in that** the locking pins (32,32b) have diameters (Dg,Dk) of different size.

6. A lock according to Claim 5, **characterised in that** the two locking hooks (51,51b) are identically formed.

7. A lock according to Claims 3 and 5 or 6, **characterised in that** the locking hook (51b), with which the locking pin (32b) of smaller diameter (Dk) can be engaged, is associated with the toggle lever (74b) in the form of a pre-release lever.

8. A lock according to Claim 4 and one of Claims 5 to 7, **characterised in that** for locking the lock (10) of the locking hook (51b), which is associated with the toggle lever (74b) in the form of a pre-release lever, can be brought manually by means of the emergency-operation lever (91) into engagement with the locking pin (32b) of smaller diameter (Dk), even if the other locking pin (32) is not engaged or cannot be engaged with the other locking hook (51).

## Revendications

1. Serrure pour un coffre à bagages monté à la partie supérieure de la cabine d'un avion et qui comporte un boitier fixe ainsi qu'un couvercle mobile autour d'un axe de rotation,
cette serrure comportant un dispositif à boulon de fermeture pouvant être monté ou monté sur le boitier et qui porte au moins un boulon de fermeture,
ainsi qu'un loquet monté ou pouvant être monté sur le couvercle et comportant au moins un crochet de fermeture pivotant autour d'un axe de pivotement pour permettre de saisir le boulon de fermeture pour verrouiller la serrure, et
un dispositif de commande actionnable manuellement permettant de faire basculer le crochet de fermeture pour le dégager du boulon de fermeture de façon à déverrouiller la serrure,
serrure dans laquelle
le dispositif à boulon de fermeture (30) porte deux boulons de fermeture (32, 32b),
le loquet (20) comporte deux crochets de fermeture (51, 51b) respectivement pivotants autour d'un axe de pivotement (22, 22b),
le dispositif de commande (60) est réalisé de façon à permettre un pivotement commun des crochets de fermeture (51, 51b),
le dispositif de commande (60) comporte une crémaillère (62) et un élément coulissant (64) qui sont montés l'un dernière l'autre dans un guidage linéaire (66), sont précontraints par la pression d'un élément à ressort (70) dans la direction d'une butée (68) et peuvent être déplacés par translation par un actionnement manuel contre la force de l'élément à ressort (70) dans la direction opposée à la butée (68), et
le dispositif de commande (60) comporte un pignon (80) venant en prise avec la denture (78) de la crémaillère (62) et pouvant être actionné par un câble de traction (50).

2. Serrure conforme à la revendication 1,
**caractérisée en ce que**
les crochets de fermeture (51, 51 b) sont respectivement reliés à la crémaillère (62) ou à l'élément coulissant (64) par un levier à genouillère (74, 74b) qui est articulé sur les crochets de fermeture (51, 51b) à proximité de leur axe de pivotement (22, 22b) de sorte que la position de verrouillage ne puisse être à nouveau ouverte qu'en exerçant une force de traction sur le point d'articulation du levier à genouillère (74, 74b) sur le crochet de fermeture (51, 51b).

3. Serrure conforme à la revendication 2,
**caractérisée en ce que**
l'un (74b) des deux leviers à genouillère (74, 74b) se prolonge au-delà de son point d'articulation sur le crochet de fermeture (51b) associé, et est réalisé sous la forme d'un levier de déclenchement pour permettre de déplacer la crémaillère (62) par translation.

4. Serrure conforme à l'une des revendications précédentes,
**caractérisée en ce que**
la crémaillère (62) comporte une denture supplémentaire (79) qui vient en prise avec une denture (90) d'un levier d'actionnement d'urgence (91) monté pivotant.

5. Serrure conforme à l'une des revendications précédentes,
**caractérisée en ce que**
les boulons de fermeture (32, 32b) ont des diamètres (Dg, Dk) différents.

6. Serrure conforme à la revendication 5,
**caractérisée en ce que**
les deux crochets de fermeture (51, 51b) sont identiques.

7. Serrure conforme aux revendications 3 et 5 ou 6,
**caractérisée en ce que**
le crochet de fermeture (51 b) avec lequel peut être mis en prise le boulon de fermeture (32b) ayant le plus petit diamètre (Dk) est associé au levier à genouillère (74b) réalisé sous la forme d'un levier de déclenchement.

8. Serrure conforme à la revendication 4 et à l'une des revendications 5 à 7,
**caractérisée en ce que**
pour verrouiller la serrure (10) le crochet de fermeture (51b) qui est associée au levier à genouillère (74b) réalisé sous la forme d'un levier de déclenchement peut être mis en prise manuellement à l'aide du levier d'actionnement d'urgence (91) avec le boulon de fermeture (32b) ayant le plus petit diamètre (Dk), ce même, lorsque l'autre boulon de fermeture (32) n'est pas en prise ou ne peut être mis en prise avec l'autre crochet de fermeture (51).
